# EUROPÄISCHE PATENTANMELDUNG

(11) **EP 3 998 560 A1**
(43) Veröffentlichungstag der Anmeldung: **18.05.2022**
(21) Anmeldenummer: 21214022.2
(22) Anmeldetag: 26.09.2013
(51) Int. Cl.: G06Q 10/02, B64D 11/00

(54) **KOMMUNIKATIONSSYSTEM UND -VERFAHREN IN EINEM FLUGZEUG**

(30) Priorität: 28.09.2012 DE 102012217795
(62) Teilanmeldung aus: 13770476.3
(71) Anmelder: Lufthansa Technik AG, 22335 Hamburg (DE)
(72) Erfinder: MUIRHEAD, Andrew, 22848 Norderstedt (DE)
(74) Vertreter: Müller Verweyen

(57) **Zusammenfassung**

Die Erfindung betrifft ein Kommunikationssystem (10) sowie Kommunikationsverfahren für Passagiere in einem Flugzeug (15). Das Flugzeug (15) weist eine flugzeuggestützte Datenverarbeitungseinrichtung (13) und mindestens eine bordfeste Kommunikationsschnittstelle (8) zur Kommunikation mit einem Passagiergerät (1) auf, wobei das Kommunikationssystem (10) zum Empfangen eines Passagierprofils von dem Passagiergerät (1) mittels der Kommunikationsschnittstelle (8) des Flugzeugs (15) und Übertragung an die Datenverarbeitungsvorrichtung eingerichtet ist.

## Beschreibung

Die Erfindung betrifft ein Kommunikationssystem für Passagiere in einem Flugzeug mit einer flugzeuggestützten Datenverarbeitungseinrichtung und mindestens einer bordfesten Kommunikationsschnittstelle zur Kommunikation mit einem Passagiergerät sowie ein Kommunikationsverfahren in einem Flugzeug mit einer flugzeuggestützten Datenverarbeitungseinrichtung und mindestens einem Passagiergerät in dem Flugzeug.

Fluggesellschaften befördern Passagiere in Flugzeugen, wobei neben dem reinen Passagiertransport insbesondere der Service und die Servicedienstleistungen während des Fluges zur Identifikation des Passagiers mit der Fluggesellschaft beitragen. Der Service und die Servicedienstleistungen können eine persönliche Betreuung durch das Kabinenpersonal, ein Bordunterhaltungssystem mit verschiedenen medialen Angeboten, Werbung und/oder Kaufangeboten für verschiedene Artikel beinhalten.

Die Passagiere sind üblicherweise dem Kabinenpersonal nicht persönlich bekannt, so dass dem Kabinenpersonal ein an den jeweiligen Passagier angepasster Service nur nach entsprechenden Gesprächen und Rückfragen möglich ist. Dies ist aufgrund des begrenzten Kabinenpersonals und der typischen Sitzanordnung in Reihen schwierig, da die Zeit für Gespräche, hier insbesondere auch die Findung einer gemeinsamen Sprache, und das Gespräch über den Kopf von mehreren Passagieren, z.B. bei Fensterplätzen, schwierig und zudem für die dazwischen sitzenden Passagiere häufig als unangenehm empfunden wird.

Die Aufgabe der Erfindung ist es daher, ein Kommunikationssystem und ein Kommunikationsverfahren in einem Flugzeug anzugeben, welche die oben genannten Nachteile überkommen.

Die Aufgabe der Erfindung wird ausgehend vom Oberbegriff des Anspruchs 1 mit dessen kennzeichnenden Merkmalen gelöst.

Es wird eine Software für ein mobiles Passagiergerät vorgeschlagen, die das Passagiergerät zur Durchführung von folgendem Schritt in dem Passagiergerät steuert: Übertragen eines Passagierprofils von dem Passagiergerät an eine Datenverarbeitungseinrichtung in einem Flugzeug über eine bordfeste Kommunikationsschnittstelle.

Das Passagierprofil ist ein personenbezogener Datensatz, der für den Service in einem Flugzeug relevante Daten enthalten kann. Im Passagierprofil können bspw. die Nationalität bzw. die bevorzugte Sprache, Essgewohnheiten, wie z.B. vegetarisch oder vegan, Musikgeschmack und/oder weitere für einen verbesserten Service an Bord des Flugzeugs dienliche Informationen sein.

Ein Passagiergerät ist ein mobiles, elektronisches Gerät, das z.B. ein Mobiltelefon, Smartphone, Tablet-PC und/oder Laptop sein kann, wobei das Gerät dem jeweiligen Passagier gehört und von ihm während der Reise bzw. des Fluges mitgeführt wird. Das Passagiergerät kann hierbei während des Fluges vom Passagier an seinem Sitzplatz betrieben werden.

Auf dem Passagiergerät kann die Software oder auch Applikation installiert bzw. eingerichtet werden, so dass die Kommunikationseinrichtungen des Passagiergeräts durch die Software gesteuert werden können, wobei durch die Steuerung des Passagiergeräts ein Passagierprofil auf die Systeme des Flugzeugs, insbesondere an eine Datenverarbeitungseinrichtung in dem Flugzeug, übertragen werden können.

Die Datenverarbeitungseinrichtung kann ein Computer bzw. Server in dem Flugzeug sein, der die entsprechenden Passagierprofile empfängt, speichert und für die Serviceleistungen an Bord nutzbar macht.

Die Übertragung des Passagierprofils erfolgt von dem Passagiergerät zu der Datenverarbeitungseinrichtung durch eine bordfeste Kommunikationsschnittstelle, so dass die Nutzung des Passagierprofils für die Serviceleistungen vollständig in dem Flugzeug ohne Einwirken von außen erfolgen kann, was die Ausfallsicherheit deutlich erhöht. Die bordfeste Kommunikationsschnittstelle ermöglicht eine Datenübertragung von den Kommunikationseinrichtungen des Passagiergeräts an die Datenverarbeitungseinrichtung, so dass eine Verbindung zwischen einem mobilen Passagiergerät eines Passagiers und einem bordfesten System erfolgen kann. Die Kommunikationsschnittstelle kann eine Nahfeldkommunikationsschnittstelle und/oder ein kabelgebundenes Datennetzwerk und/oder ein Drahtlosdatennetzwerk umfassen.

Vorzugsweise steuert die Software einen Bezug des Passagierprofils aus einem Speicher des Passagiergeräts. Das Passagierprofil kann insbesondere durch den Passagier selbst vor dem Flug mit Hilfe der Software angelegt bzw. ausgefüllt werden, wobei das Passagierprofil auf dem Passagiergerät speicherbar ist, d.h. die personenbezogenen Daten des Passagiergeräts werden in der Hardware des Passagiergeräts gespeichert. Befindet sich der Passagier mit seinem Passagiergerät in dem Flugzeug, wird das Passagierprofil durch die Software aus dem Speicher bzw. der Hardware des Passagiergerätes bezogen und kann anschließend an die Datenverarbeitungseinrichtung übertragen werden.

Alternativ oder ergänzend steuert die Software in vorteilhafter Weise einen Bezug des Passagierprofils aus einer bodenfesten Datenbank in das Passagiergerät. Das Passagierprofil kann auf einem über das Internet erreichbaren Server in einer bodenfesten Datenbank hinterlegt bzw. gespeichert werden, so dass das Passagierprofil dem Passagier unabhängig von einem bestimmten Passagiergerät zur Verfügung steht.

In einer bevorzugten Ausführungsform ermöglicht die Software die Änderung des Passagierprofils. Die Änderungen des Passagierprofils umfassen die Änderung von bereits getätigten Angaben und/oder die Ergänzung von weiteren Informationen, die vorzugsweise auch während des Aufenthalts in dem Flugzeug durch die Software auf dem Passagiergerät ermöglicht werden. Somit kann der Passagier entsprechend seiner aktuellen Stimmung verschiedene Angaben machen und sein Passagierprofil dementsprechend abändern.

Vorzugsweise wird bei einer Änderung des Passagierprofils eine Übertragung des geänderten Passagierprofils an die Datenverarbeitungseinrichtung angefragt oder veranlasst. Dies ermöglicht eine direkte Aktualisierung des Passagierprofils in der Datenverarbeitungseinrichtung des Flugzeugs, so dass dort nach einer Änderung des Passagierprofils durch den Passagier auf dem Passagiergerät zeitnah das aktuelle Passagierprofil zur Verfügung steht. Die Anfrage ermöglicht eine Entscheidung durch den Passagier, ob die getätigten Änderungen übertragen werden sollen, wobei der Passagier gleichzeitig an die mögliche und vorteilhafte Übertragung erinnert wird.

Weiterhin steuert die Software vorzugsweise das Passagiergerät zur Durchführung folgender Schritte in dem Passagiergerät. In einem ersten Schritt erfolgt eine Erkennung eines Anschlussvorganges des Passagiergeräts an die bordfeste Kommunikationsschnittstelle des Flugzeugs, wobei die Kommunikationsschnittstelle eine Nahfeldkommunikationsschnittstelle und/oder ein kabelgebundenes Datennetzwerk und/oder ein Drahtlosdatennetzwerk umfasst. In einem zweiten Schritt erfolgt nach der Erkennung des Anschlussvorganges an die bordfeste Kommunikationsschnittstelle eine automatische Übermittlung des Passagierprofils über die bordfeste Kommunikationsschnittstelle an die Datenverarbeitungseinrichtung des Flugzeugs.

Ein Anschlussvorgang kann ein draht- und/oder funkgebundener Anschluss des Passagiergeräts an die bordfeste Kommunikationsschnittstelle des Flugzeugs sein, wobei die Software einen Anschlussvorgang der Kommunikationseinrichtung des Passagiergeräts an ein Fremdsystem erkennt und zudem durch eine entsprechende Übermittlung einer Kennung oder eines Identifikationsmerkmals von einer bordfesten Kommunikationsschnittstelle an das Passagiergerät den Anschlussvorgang an eine entsprechende bordfeste Kommunikationsschnittstelle eines entsprechenden Flugzeugs erkennt und somit von einem Anschlussvorgang an ein beliebiges Fremdsystem unterscheiden kann. Nach der Erkennung wird das Passagierprofil automatisch übertragen, so dass das Passagierprofil für einen angepassten und verbesserten Service an Bord direkt nach dem Anschlussvorgang zur Verfügung steht. Für den Passagier kann es somit ausreichend sein, sein Passagiergerät an Bord des Flugzeugs an eine entsprechende Schnittstelle anzuschließen, um einen durch die im Passagierprofil hinterlegten Informationen angepassten und verbesserten Service im Flugzeug zu erhalten.

In einer vorteilhaften Ausführungsform steuert die Software das Passagiergerät nach der Erkennung der bordfesten Kommunikationsschnittstelle, eine bestimmte graphische Bedienoberfläche auf dem Passagiergerät anzuzeigen. Die graphische Bedienoberfläche kann bspw. einen Hinweis für den Passagier auf den Anschluss an die flugzeugfesten Systeme enthalten und zudem weiterführende Möglichkeiten für den Passagier, wie einen Internetzugang für das Passagiergerät über Bordsysteme des Flugzeugs, aufzeigen und/oder anbieten. Weiterhin kann das Passagierprofil auf der Bedienoberfläche angezeigt werden, so dass auch eine direkte Bewertung oder Notierung der Serviceleistungen für den Passagier möglich werden.

Vorzugsweise steuert die Software das Passagiergerät zur Durchführung folgender Schritte in dem Passagiergerät, wobei in einem ersten Schritt ein Empfang eines Steuersignals von der Datenverarbeitungseinrichtung des Flugzeugs erfolgt und in einem zweiten Schritt ein Ausschalten aller Funksender des Passagiergeräts infolge des Empfangs des Steuersignals erfolgt. In kritischen Flugphasen, wie Start, Landung oder Rollen, ist aus Sicherheitsgründen der Betrieb von elektrischen Geräten der Passagiere luftfahrtrechtlich eingeschränkt. Der aktive Funkbetrieb ist aufgrund der möglichen Wechselwirkung mit sicherheitsrelevanten Systemen des Flugzeugs in diesen Flugphasen nicht zulässig, so dass die Passagiere ihre Passagiergeräte dementsprechend ausschalten oder die entsprechenden Funktionen der Passagiergeräte abschalten. Beginnt eine solche kritische Flugphase, wird dies durch entsprechende Signale in der Kabine angezeigt, zudem wird von der Datenverarbeitungseinrichtung über die bordfeste Kommunikationsschnittstelle ein Steuersignal an die angeschlossenen Passagiergeräte versendet, wodurch die Software die Abschaltung aller funkaktiven Komponenten des jeweiligen Passagiergerätes steuert. Daher werden die angeschlossenen Passagiergeräte durch die Datenverarbeitungseinrichtung des Flugzeugs entsprechend der luftfahrtrechtlichen Vorgaben geschaltet, was den Passagier von dieser Tätigkeit entbindet und weiterhin die entsprechende Abschaltung unabhängig vom Einwirken des Passagiers sicherstellt.

Die Software steuert vorzugsweise die Übermittlung von Bezahldaten an die Datenverarbeitungseinrichtung. Bezahldaten können bspw. Kontodaten von Bankkonten und/oder Kontodaten von Guthabenkonten, z.B. der Fluggesellschaft, sein, die dafür eingesetzt werden, Käufe von Waren und Dienstleistungen im Flugzeug abzuwickeln. Weiterhin kann die Steuerung der Übermittlung von Bezahldaten auch die Steuerung einer Nahfeldkommunikationseinrichtung zur Übertragung von Bezahldaten nach einem NFC-Standard umfassen.

Weiterhin wird die Aufgabe der Erfindung ausgehend vom Oberbegriff des Anspruchs 1 in Verbindung mit dessen kennzeichnenden Merkmalen gelöst. Es wird ein Kommunikationssystem für Passagiere in einem Flugzeug mit einer flugzeuggestützten Datenverarbeitungseinrichtung und mindestens einer bordfesten Kommunikationsschnittstelle zur Kommunikation mit einem Passagiergerät vorgeschlagen. Erfindungsgemäß ist das Kommunikationssystem zum Empfangen eines Passagierprofils von dem Passagiergerät mittels der Kommunikationsschnittstelle des Flugzeugs und Übertragung an die Datenverarbeitungsvorrichtung eingerichtet.

Vorzugsweise steuert das Kommunikationssystem in Abhängigkeit von einem empfangenen Passagierprofil ein Bordunterhaltungssystem und/oder stellt dem Kabinenpersonal Passagierinformationen zur Verfügung. Alternativ oder ergänzend ermöglicht das Kommunikationssystem in Abhängigkeit von einem empfangenen Passagierprofil Bezahlvorgänge und/oder stellt Werbung für den Passagier bereit und/oder speichert Informationen für die Airline.

Das Passagierprofil kann somit in vorteilhafter Weise die Vorauswahl der in einem Bordunterhaltungssystem angebotenen Inhalte entsprechend an den Passagier anpassen. Eine solche Anpassung kann die Sprachauswahl, Musikrichtung, Lieblingsfilme und/oder bevorzugte Spiele beinhalten. Dem Kabinenpersonal können die Inhalte der Passagierprofile bspw. in der Bordküche dargestellt werden, so dass eine entsprechende Essenauswahl von dort zu den Sitzplätzen gebracht werden kann. Dies ermöglicht eine schnelle und direkte Essenausgabe im Flugzeug. Weiterhin können ggf. im Passagierprofil angegebene Sonderwünsche bereits in der Bordküche erkannt und vom Kabinenpersonal berücksichtigt werden. Weiterhin können etwaige Wünsche der Passagiere direkt mit den Daten aus dem Passagierprofil abgerechnet werden, so dass die Bezahlvorgänge mittels des Passagierprofils effizient gestaltet werden können. Die Daten der Passagierprofile können weiterhin auf der Datenverarbeitungseinrichtung personengebunden oder anonymisiert für eine Auswertung durch die Fluggesellschaft gespeichert werden. Geben beispielsweise viele Passagiere an, ein bestimmtes Gericht sei sehr wohlschmeckend, kann dieses zur Auswahl der Menüs für spätere Flüge berücksichtigt werden. Weiterhin kann Werbung entsprechend der Angaben im Passagierprofil gestaltet werden.

Das Kommunikationssystem weist in einer bevorzugten Ausführungsform mindestens eine Nahfeldkommunikationsschnittstelle in dem Flugzeug auf. Nahfeldkommunikation ist auch unter NFC bekannt und ist ein unter Near Field Communication (NFC) bekannter Übertragungsstandard, welcher für einen kontaktlosen Datenaustausch über Entfernungen von weniger als 5 cm eingerichtet ist. Hierdurch ist ein funkgebundener Anschluss nur eines Passagiergerätes an einer Kommunikationsschnittstelle möglich, wodurch ein Abhören der übertragenen Inhalte durch weitere Passagiergeräte bei einer kabellosen Datenübertragung verhindert wird.

Vorzugsweise ist mit dem Passagierprofil eine Sitzplatzkennung an die Datenverarbeitungseinrichtung übermittelbar, wobei die Sitzplatzkennung einem Sitzplatz in dem Flugzeug zugeordnet ist. Die Sitzplatzkennung beinhaltet die Bezeichnung und/oder Ortsangabe eines bestimmten Sitzplatzes in der Kabine, wobei die Sitzplatzkennung des Sitzplatzes, auf dem der entsprechende Passagier sitzt, übermittelt wird.

Weiterhin wird die Aufgabe der Erfindung ausgehend vom Oberbegriff des Anspruchs 13 in Verbindung mit dessen kennzeichnenden Merkmalen gelöst. Bei einem Kommunikationsverfahren in einem Flugzeug mit einer flugzeuggestützten Datenverarbeitungseinrichtung und mindestens einem Passagiergerät in dem Flugzeug überträgt erfindungsgemäß das Passagiergerät über eine Nahfeldkommunikationsschnittstelle des Flugzeugs ein Passagierprofil an die Datenverarbeitungseinrichtung und dem Passagierprofil wird eine Sitzplatzkennung eines Sitzplatzes in dem Flugzeug durch die Datenverarbeitungseinrichtung und/oder Nahfeldkommunikationsschnittstelle zugeordnet, wobei das Passagierprofil in Verbindung mit der Sitzplatzkennung ein Bordunterhaltungssystem des Flugzeugs steuert.

Die Verknüpfung der Sitzplatzkennung mit dem Passagierprofil ist für die Nutzung des Passagierprofils vorteilhaft, da viele Serviceleistungen sitzplatzbezogen sind oder durch den Sitzplatz eine einfache und schnelle Zuordnung zu dem entsprechenden Passagier ermöglicht wird. Sitzplatzbezogen kann zum Beispiel die Freischaltung von bestimmten Inhalten eines Bordunterhaltungssystems mit einem zugeordneten Bildschirm an diesem Sitzplatz sein. Insbesondere die Verwendung einer Nahfeldkommunikationsschnittstelle als bordfeste Kommunikationsschnittstelle an einem bestimmten Sitzplatz ermöglicht in einer einfachen Weise die Übermittlung des Passagierprofils mit einer Sitzplatzkennung, sofern die Nahfeldkommunikationsschnittstelle jeweils einem bestimmten Sitzplatz zugeordnet ist. Weiterhin können die Inhalte des Bordunterhaltungssystems über die entsprechende Kommunikationsschnittstelle an einem Sitzplatz auf das Passagiergerät übertragen werden, wobei durch die Nahfeldkommunikationsschnittstelle eine direkte physische Zuordnung ermöglicht wird, wodurch das Bordunterhaltssystem sitzplatzbezogen gesteuert wird.

Vorzugsweise wird in dem Kommunikationsverfahren mit dem oben beschriebenen Kommunikationssystem von der Datenverarbeitungseinrichtung ein Sicherheitssignal an das Passagiergerät übertragen, wobei das Passagiergerät ihm zugehörige Funksender abschaltet. Die Abschaltung der Funksender ermöglicht einen sicheren Flugbetrieb bei Anwesenheit von Passagiergeräten nach luftfahrtrechtlichen Anforderungen, insbesondere in den kritischen Flugphasen Start, Landung und Rollen.

Die Erfindung wird im Folgenden anhand bevorzugter Ausführungsformen unter Bezugnahme auf die beigefügten Figuren erläutert. Dabei zeigt:
- Fig. 1: eine schematische Darstellung eines Kommunikations-systems; und
- Fig. 2: eine Nahfeldkommunikationsschnittstelle an einem Flugzeugsitz.

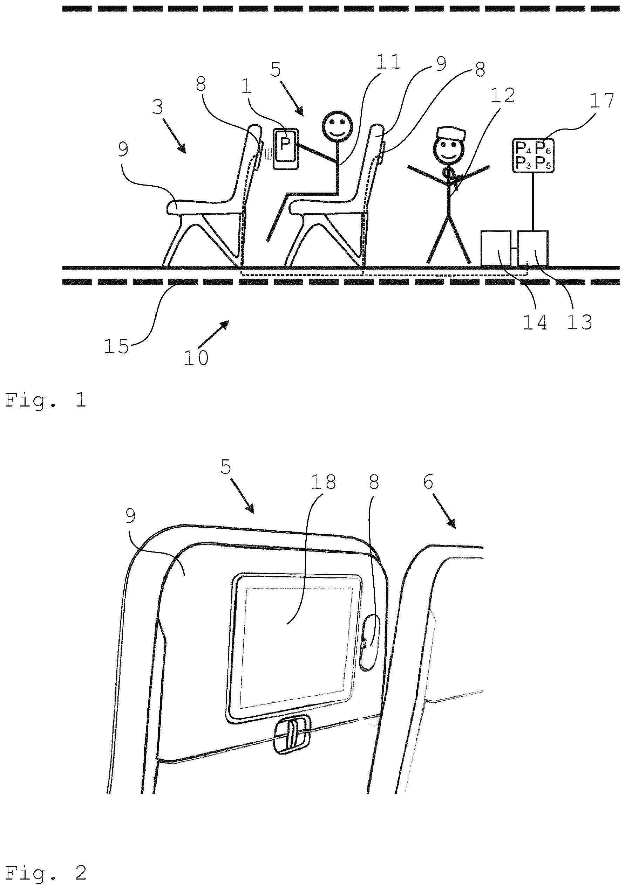

In Fig. 1 ist ein Ausführungsbeispiel eines Kommunikationssystems 10 für Passagiere 11 in einem Flugzeug 15 dargestellt. Das Flugzeug 15 weist eine flugzeuggestützte Datenverarbeitungseinrichtung 13 auf, die mit in diesem vorteilhaften Ausführungsbeispiel bordfesten Kommunikationsschnittstellen 8 an jedem Flugzeugsitz 9 verbunden ist. Die bordfeste Kommunikationsschnittstelle 8 ist vorteilhaft auf der Rückseite eines Flugzeugsitzes 9 angeordnet, so dass diese für den dahinter auf dem Flugzeugsitz 9 sitzenden Passagier 11 nutzbar ist. Weiterhin weist die Datenverarbeitungseinrichtung 13 eine Verbindung zu einem Bordunterhaltungssystem 14 auf.

In einem möglichen Anwendungsfall führt der Passagier 11 ein mobiles Passagiergerät 1 auf seiner Reise in dem Flugzeug 15 mit, bspw. ein Smartphone. Auf diesem mobilen Passagiergerät 1 hat der Passagier 11 in einem möglichen Ausführungsbeispiel vor seiner Reise die Software zur Erstellung und Bearbeitung seines Passagierprofils installiert. In einem alternativen Ausführungsbeispiel ist das Passagierprofil ohne die Installation der Software auf dem Passagiergerät 1 erstellbar, bearbeitbar und/oder speicherbar. Dies kann beispielsweise über eine Homepage der Fluggesellschaft erfolgen.

Der Passagier 11 erstellt sein Passagierprofil und nimmt das Passagiergerät 1 mit an Bord des Flugzeugs 15. Nachdem der Passagier 11 seinen Sitzplatz 5 auf einem Flugzeugsitz 9 hinter dem weiteren Sitzplatz 3 eingenommen hat, schließt der Passagier 11 sein mobiles Passagiergerät 1 an die bordfeste Kommunikationsschnittstelle 8 an. Dieser Anschluss kann beispielsweise mit einem Datenkabel an die Kommunikationsschnittstelle am Flugzeugsitz 9, hier z.B. nach dem USB-Standard, oder mittels eines Verbindungsaufbaus mit einem Drahtlosnetzwerk (WLAN) des Flugzeugs 15 erfolgen, wobei die Kommunikationsschnittstelle 8 bei einem Drahtlosnetzwerk typischerweise nicht an jedem Flugzeugsitz 9 installiert ist, sondern für einen größeren Bereich in der Kabine des Flugzeugs 15. In einem bevorzugten Ausführungsbeispiel umfasst die Kommunikationsschnittstelle 8 eine Nahfeldkommunikationsschnittstelle. Der Passagier 11 bringt sein Passagiergerät 1 in die direkte Nähe der Nahfeldkommunikationsschnittstelle, vorzugsweise weniger als 10 cm, um es an die bordfeste Kommunikationsschnittstelle 8 anzuschließen. Das Passagiergerät 1 verfügt hierfür ebenfalls über eine Nahfeldkommunikationseinrichtung.

Die Software auf dem Passagiergerät 1 detektiert vorteilhafterweise den Anschluss des Passagiergeräts 1 an die Kommunikationsschnittstelle 8 des Flugzeugs 15 der entsprechenden Fluggesellschaft und bezieht das Passagierprofil aus einem Speicher des Passagiergeräts 1, welches automatisch über die bordfeste Kommunikationsschnittstelle 8 an die Datenverarbeitungseinrichtung 13 übermittelt wird.

Weiterhin wird nach der Erkennung des Anschlusses des Passagiergeräts 1 an die bordfeste Kommunikationsschnittstelle 8 eine Bedienoberfläche angezeigt, die bspw. seine Profildaten beinhalten kann.

Mit dem Passagierprofil kann vorzugsweise eine Sitzplatzkennung, z.B. des Sitzplatzes 5, an die Datenverarbeitungseinrichtung 13 übermittelt werden. Die Sitzplatzkennung kann beispielsweise an einer Kommunikationsschnittstelle 8 mit Nahfeldkommunikationsschnittstelle, welche jeweils einem Sitzplatz 3,5,6 zugeordnet ist, hinterlegt sein. Auf diese Weise kann in diesem Beispiel dem Passagierprofil des Passagiers 11 in einfacher Weise der Sitzplatz 5 in der Datenverarbeitungseinrichtung 13 zugeordnet werden.

Der Passagier 11 kann nun beispielsweise eine Eintragung in seinem Passagierprofil, welches in dem Passagiergerät 1 gespeichert ist, ändern. Eine solche Änderung kann bspw. sein, dass der Passagier 11 Tomatensaft Apfelsaft als Getränk während eines Fluges vorzieht. Das Passagiergerät 1 erkennt mittels der Software die Änderung des Passagierprofils und übermittelt diese Änderung an die Datenverarbeitungseinrichtung 13 des Flugzeugs 15. Alternativ kann die Übermittlung bei dem Passagier 11 zunächst durch das Passagiergerät 1 angefragt werden.

Das Flugzeug 15 befindet sich in diesem Ausführungsbeispiel inzwischen kurz vor dem Start und die Besatzung fordert die Passagiere 11 durch eine Ansage und entsprechende Anzeigen in der Kabine des Flugzeugs 15 auf, ihre elektronischen Passagiergeräte 1 zu deaktivieren. Neben einem möglichen Aufleuchten einer entsprechenden Anzeige in der Kabine erfolgt die Versendung eines Steuersignals durch die Datenverarbeitungseinrichtung 13 an alle über die Kommunikationsschnittstellen 8 angeschlossenen Passagiergeräte 1. Das Passagiergerät 1 kann mit Hilfe der Software dieses Signal identifizieren und schaltet daraufhin alle Funkeinrichtungen des Passagiergerätes 1 ab, auch als Flugzeugmodus bekannt, oder das Passagiergerät 1 selbst aus, so dass diese Handlung nicht mehr vom Passagier 11 selbst vorgenommen werden muss.

Das Flugzeug 15 erreicht im Ausführungsbeispiel den Reiseflug und der Passagier 11 kann nach dem Erlöschen der entsprechenden Anzeigen in der Kabine sein Passagiergerät 1 wieder aktivieren und nutzen.

Das Kabinenpersonal 12 kann in diesem Ausführungsbeispiel mit einem Bordservice beginnen und möchte dem Passagier 11 ein Getränk anbieten. Das Passagierprofil des Passagiers 11 ist auf der Datenverarbeitungseinrichtung 13 des Flugzeugs 15 gespeichert, die dieses Passagierprofil oder Teile davon auf einem Personalbildschirm 17, z.B. in der Bordküche, darstellt. Das Kabinenpersonal 12 kann daher in der Bordküche erkennen, dass der Passagier 11, welcher entsprechend der übermittelten Sitzplatzkennung auf dem Sitzplatz 5 sitzt, gerne Tomatensaft trinkt, und diesen in der Bordküche vorbereiten und anschließend direkt servieren.

Weiterhin hat der Passagier 11 in seinem Passagierprofil angegeben, dass er nur Englisch spricht, so dass das Kabinenpersonal 12 ihn entsprechend auf Englisch ansprechen kann. Die in dem Passagierprofil hinterlegte Information, beispielsweise die Sprache, steuert in einem vorteilhaften Ausführungsbeispiel ein Bordunterhaltungssystem 14, welches dem Passagier 11 verschiedene Medienangebote bietet.

In Fig. 2 ist der Sitzplatz 5 neben einem Sitzplatz 6 des Passagiers 11 dargestellt. Links von der Kommunikationsschnittstelle 8 mit Nahfeldkommunikationsschnittstelle ist ein Bildschirm 18 des Bordunterhaltungssystems 14 angeordnet. Auf dem Bildschirm 18 werden die Medienangebote des Bordunterhaltungssystems 14, wie z.B. Filme, Spiele, Fernsehen oder Internetseiten, dargestellt. Die Auswahl erfolgt typischerweise über Menüs, die, wie die Inhalte, in verschiedenen Sprachen verfügbar sind. Das Passagierprofil kann in diesem Ausführungsbeispiel das Bordunterhaltungssystem 14 am Sitzplatz 5 so steuern, dass dem Passagier 11 die Inhalte direkt, in diesem Ausführungsbeispiel auf Englisch, der im Passagierprofil angegebenen Sprache, angeboten werden. Zudem ist es möglich, dass dem Passagier 11 hierüber seinem Passagierprofil entsprechende Werbeinformationen angeboten werden.

Weiterhin können mit dem Passagierprofil in einem möglichen Ausführungsbeispiel Bezahldaten zur Datenverarbeitungseinrichtung 13 des Flugzeugs 15 übertragen werden. Die Bezahldaten können Kontoinformationen eines Bankkontos oder z.B. Guthabeninformationen von einem Guthabenkonto bei der Fluggesellschaft sein, die eine Abrechnung von möglichen Servicedienstleistungen des Kabinenpersonals 12, den Kauf von Artikeln im Flugzeug 15 oder die Nutzung von bestimmten Angeboten des Bordunterhaltungssystems 14, wie Internetzugängen im Flugzeug 15, ermöglichen.

In einem möglichen Ausführungsbeispiel können die Bezahldaten und/oder das Passagierprofil über eine externe Kommunikationseinrichtung des Flugzeugs 15 abgeglichen werden, so dass in der Datenverarbeitungseinrichtung 13 eine Verifikation des Passagierprofils und/oder der Bezahldaten möglich ist.

Die Übertragung von Bezahldaten mittels Nahfeldkommunikation (NFC) zur Durchführung eines Bezahlvorgangs ist vorteilhaft, da bekannte und sichere Übertragungsstandards verwendet werden können.

In einem weiteren möglichen Ausführungsbeispiel kann das Passagierprofil auf einer bodenfesten Datenbank gespeichert werden, so dass die Daten des Passagierprofils für den Passagier 11 von jedem beliebigen Passagiergerät 1 weltweit, bspw. über eine externe Datenverbindung, abgerufen bzw. geladen werden können, so dass das Kommunikationssystem 10 mit unterschiedlichen Passagiergeräten 1 für den Passagier 11 nutzbar ist.

Die bodenfeste Datenbank ist jedoch nicht für den Betrieb des Kommunikationssystems 10 bzw. die Anwendung des Kommunikationsverfahrens notwendig, was bspw. bei Ausfall der externen Datenverbindung des Flugzeugs 15 besonders vorteilhaft ist, da das Kommunikationssystem 10 in dem Flugzeug 15 mit den Passagiergeräten 1 auch autark funktionieren kann.

## Patentansprüche

1. Kommunikationssystem (10) für Passagiere in einem Flugzeug (15) mit einer flugzeuggestützten Datenverarbeitungseinrichtung (13), und
- mindestens einer bordfesten Kommunikationsschnittstelle (8) zur Kommunikation mit einem Passagiergerät (1), wobei
- das Kommunikationssystem (10) zum Empfangen eines Passagierprofils von dem Passagiergerät (1) mittels der Kommunikationsschnittstelle (8) des Flugzeugs (15) und Übertragung an die Datenverarbeitungseinrichtung (13) eingerichtet ist, wobei
- das Kommunikationssystem (10) mindestens eine Nahfeldkommunikationsschnittstelle in dem Flugzeug (15) aufweist, **dadurch gekennzeichnet, dass**
- mit dem Passagierprofil eine Sitzplatzkennung an die Datenverarbeitungseinrichtung (13) übermittelbar ist, wobei die Sitzplatzkennung einem Sitzplatz (3,5,6) in dem Flugzeug (15) zugeordnet ist.

2. Kommunikationssystem (10) nach Anspruch 1, **dadurch gekennzeichnet, dass**
- das Kommunikationssystem (10) eine Mehrzahl von bordfesten Kommunikationsschnittstellen (8) umfasst, die zur Kommunikation mit einem Passagiergerät (1) eingerichtet und mit der Datenverarbeitungseinrichtung (13) verbunden sind, wobei
- die Kommunikationsschnittstellen (8) jeweils einem Sitzplatz (3,5,6) zugeordnet sind, wobei
- die Kommunikationsschnittstellen (8) jeweils eine Nahfeldkommunikationsschnittstelle aufweisen, wobei
- an den Kommunikationsschnittstellen (8) jeweils eine Sitzplatzkennung hinterlegt ist, so dass die Sitzplatzkennung einem Sitzplatz (3,5,6) in dem Flugzeug (15) zugeordnet ist, wobei
- die Datenverarbeitungseinrichtung (13) zur Übertragung eines Sicherheitssignals an alle über die Kommunikationsschnittstellen (8) angeschlossenen Passagiergeräte (1) eingerichtet ist, damit das Passagiergerät (1) ihm zugehörige Funksender abschalten oder das Passagiergerät (1) selbst ausschalten kann.

3. Kommunikationssystem (10) nach einem der vorangehenden Ansprüche, **dadurch gekennzeichnet, dass** das Kommunikationssystem (10) in Abhängigkeit von einem empfangenen Passagierprofil:
- ein Bordunterhaltungssystem (14) steuert; und/oder
- dem Kabinenpersonal (12) Passagierinformationen zur Verfügung stellt; und/oder
- Bezahlvorgänge ermöglicht; und/oder
- Werbung für den Passagier bereitstellt; und/oder
- Informationen für die Airline speichert.

4. Kommunikationssystem (10) nach einem der vorangehenden Ansprüche, umfassend ein mobiles Passagiergerät (1) und eine Software für das mobile Passagiergerät (1), **dadurch gekennzeichnet, dass** die Software das Passagiergerät (1) zur Durchführung von folgendem Schritt in dem Passagiergerät (1) steuert:
- Übertragen eines Passagierprofils von dem Passagiergerät (1) an eine Datenverarbeitungseinrichtung (13) in einem Flugzeug (15) über eine bordfeste Kommunikationsschnittstelle (8).

5. Kommunikationssystem (10) nach Anspruch 4, **dadurch gekennzeichnet, dass** die Software einen Bezug des Passagierprofils aus einem Speicher des Passagiergeräts (1) steuert.

6. Kommunikationssystem (10) nach Anspruch 4 oder 5, **dadurch gekennzeichnet, dass** die Software einen Bezug des Passagierprofils aus einer bodenfesten Datenbank in das Passagiergerät (1) steuert.

7. Kommunikationssystem (10) nach einem der Ansprüche 4 bis 6, **dadurch gekennzeichnet, dass** die Software die Änderung des Passagierprofils ermöglicht.

8. Kommunikationssystem (10) nach Anspruch 7, **dadurch gekennzeichnet, dass** bei einer Änderung des Passagierprofils eine Übertragung des geänderten Passagierprofils an die Datenverarbeitungseinrichtung (13) angefragt oder veranlasst wird.

9. Kommunikationssystem (10) nach einem der Ansprüche 4 bis 8, **dadurch gekennzeichnet, dass** die Software das Passagiergerät (1) zur Durchführung folgender Schritte in dem Passagiergerät (1) steuert:
- Erkennung eines Anschlussvorganges des Passagiergeräts (1) an die bordfeste Kommunikationsschnittstelle (8) des Flugzeugs (15), wobei die Kommunikationsschnittstelle (8) eine Nahfeldkommunikationsschnittstelle und/oder ein kabelgebundenes Datennetzwerk und/oder ein Drahtlosdatennetzwerk umfasst, und
- automatische Übermittlung des Passagierprofils über die bordfeste Kommunikationsschnittstelle (8) an die Datenverarbeitungseinrichtung (13) des Flugzeugs (15) nach der Erkennung des Anschlussvorganges an die bordfeste Kommunikationsschnittstelle (8).

10. Kommunikationssystem (10) nach Anspruch 9, **dadurch gekennzeichnet, dass** die Software nach der Erkennung der bordfesten Kommunikationsschnittstelle (8) das Passagiergerät (1) steuert, eine bestimmte graphische Bedienoberfläche auf dem Passagiergerät (1) anzuzeigen.

11. Kommunikationssystem (10) nach einem der Ansprüche 4 bis 10, **dadurch gekennzeichnet, dass** die Software das Passagiergerät (1) zur Durchführung folgender Schritte in dem Passagiergerät (1) steuert:
- Empfangen eines Steuersignals von der Datenverarbeitungseinrichtung (13) des Flugzeugs (15), und
- Ausschalten aller Funksender des Passagiergeräts (1) infolge des Empfangs des Steuersignals.

12. Kommunikationssystem (10) nach einem der Ansprüche 4 bis 11, **dadurch gekennzeichnet, dass** die Software die Übermittlung von Bezahldaten an die Datenverarbeitungseinrichtung (13) steuert.

13. Kommunikationsverfahren in einem Flugzeug (15) mit
- einer flugzeuggestützten Datenverarbeitungseinrichtung (13) und
- mindestens einem Passagiergerät (1) in dem Flugzeug (15), **dadurch gekennzeichnet, dass**
- das Passagiergerät (1) über eine Nahfeldkommunikationsschnittstelle des Flugzeugs (15) ein Passagierprofil an die Datenverarbeitungseinrichtung (13) überträgt, und
- dem Passagierprofil eine Sitzplatzkennung eines Sitzplatzes (3,5,6) in dem Flugzeug (15) durch die Datenverarbeitungseinrichtung (13) und/oder Nahfeldkommunikationsschnittstelle zugeordnet wird, und
- das Passagierprofil in Verbindung mit der Sitzplatzkennung ein Bordunterhaltungssystem (14) des Flugzeugs (15) steuert.

14. Kommunikationsverfahren nach Anspruch 13, **dadurch gekennzeichnet, dass** in einem Kommunikationssystem (10) nach einem der Ansprüche 1 bis 12 die Datenverarbeitungseinrichtung (13) ein Sicherheitssignal an das Passagiergerät (1) überträgt, und das Passagiergerät (1) ihm zugehörige Funksender abschaltet.

15. Flugzeug (15) mit einer externen Kommunikationseinrichtung sowie einem Kommunikationssystem (10) für Passagiere in einem Flugzeug (15) mit einer flugzeuggestützten Datenverarbeitungseinrichtung (13), wobei das Kommunikationssystem (10)
- eine Mehrzahl von bordfesten Kommunikationsschnittstellen (8) umfasst, die zur Kommunikation mit einem Passagiergerät (1) eingerichtet und mit der Datenverarbeitungseinrichtung (13) verbunden sind, wobei
- die Kommunikationsschnittstellen (8) jeweils einem Sitzplatz (3,5,6) zugeordnet sind, wobei
- das Kommunikationssystem (10) zum Empfangen eines Passagierprofils von dem Passagiergerät (1) mittels der Kommunikationsschnittstelle (8) des Flugzeugs (15) und zur Übertragung an die Datenverarbeitungseinrichtung (13) eingerichtet ist, **dadurch gekennzeichnet, dass**
- die Kommunikationsschnittstellen (8) jeweils eine Nahfeldkommunikationsschnittstelle aufweisen;
- an den Kommunikationsschnittstellen (8) jeweils eine Sitzplatzkennung hinterlegt ist, so dass die Sitzplatzkennung einem Sitzplatz (3,5,6) in dem Flugzeug (15) zugeordnet ist;
- mit dem Passagierprofil die Sitzplatzkennung an die Datenverarbeitungseinrichtung (13) übermittelbar ist; und
- mit dem Passagierprofil Bezahldaten zur Datenverarbeitungseinrichtung (13) des Flugzeugs (15) mittels Nahfeldkommunikation nach einem NFC-Standard übertragbar sind, wobei
- die Bezahldaten über die externe Kommunikationseinrichtung des Flugzeugs (15) abgeglichen werden, so dass in der Datenverarbeitungseinrichtung (13) eine Verifikation der Bezahldaten möglich ist.
